**Europäisches Patentamt**

**European Patent Office**

**Office européen des brevets**

(19)

(11) **EP 1 577 990 A2**

(12) **EUROPEAN PATENT APPLICATION**

(43) Date of publication:
**21.09.2005 Bulletin 2005/38**

(51) Int Cl.$^7$: **H01S 3/104**

(21) Application number: **05005643.1**

(22) Date of filing: **15.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **19.03.2004 JP 2004079529**

(71) Applicant: **FANUC LTD**
**Yamanashi 401-0597 (JP)**

(72) Inventors:
 • **Egawa, Akira**
  **Shizuoka 412-0043 (JP)**

 • **Suzuki, Kazuhiro, c/o Room 12-602**
  **Minamitsuru-gun, Yamanashi 401-0511 (JP)**
 • **Sato, Motohiko, c/o FANUC**
  **Minamitsuru-gun, Yamanashi 401-0511 (JP)**

(74) Representative: **Schmidt, Steffen J.**
 **Wuesthoff & Wuesthoff,**
 **Patent- und Rechtsanwälte,**
 **Schweigerstrasse 2**
 **81541 München (DE)**

(54) **Laser unit**

(57)     A laser unit capable of suitably updating a correction coefficient for correcting a laser output command for a laser oscillator. Validation of input of an update activation signal for the correction coefficient (F1=1) or waiting is carried out by operation of a display, a keyboard or a switch or by inputting an external signal. Flag F2 indicating automatic running, flag F3 indicating laser beam output and flag F4 indicating a shutter condition are checked. The correction coefficient is set to "1" only when flags F2, F3 and F4 are all equal to zero. Further, a laser output reference command value is outputted and the correction coefficient is updated after a predetermined time. Otherwise, a message indicating a reason for prohibition of update of the correction coefficient is displayed on an indicator, flag F1 is set to zero and the process is terminated.

Fig.5

**EP 1 577 990 A2**

**Description**

BACKGROUND OF THE INVENTION

1. Field of the Invention

The present invention relates to a laser unit that is used to carry out laser beam machining, illumination, chemical reaction, power generation, etc. by using a laser beam. The invention particularly relates to a technique for correcting a laser output of the laser unit.

2. Description of the Related Art

As is well known, a laser unit that outputs a laser beam is used for chemical reaction, power generation, etc., as well as for laser beam machining and illumination. In many cases, the laser unit that is used for these purposes requires a technique of correcting a laser beam output. For example, a laser beam machine is required to accurately control the output to maintain machining performance. For this purpose, a command value based on which the output is controlled is corrected, thereby driving the laser unit. Representative factors that require this correction are a change in the orientations of mirrors used for a resonator, and aging of the mirrors due to contamination. In order to compensate for the influence of the aging, a correction coefficient is multiplied by the command value, thereby adjusting the actual output of the laser beam, before carrying out a laser beam machining.

As one of methods for correcting the command value, the following method is available. At a starting time of an oscillator, a ratio of a known reference command value to an actual measured value of the oscillator is obtained. A coefficient (hereinafter referred to as a power correction coefficient, or simply referred to as a correction coefficient) is obtained based on this ratio. This correction coefficient is multiplied by the command value to correct the laser output (refer to Japanese Unexamined Patent Publication (Kokai) No. 64-18285). This method has an advantage in that an expensive detector for monitoring the output is not necessary, and that the laser output can be easily corrected.

In the above method, the oscillator is, at the starting time, activated for a predetermined time for obtaining a stable oscillation of the oscillator and, then, the measurement is carried out to calculate the correction coefficient. Therefore, the method may have a problem when the method is applied to the laser unit of a laser application device running for long time, especially for 24 hours per day. In other words, in such running, once the oscillator is activated, a very long time may pass (for example, several hundred hours) until the oscillator is stopped and restarted. The correction coefficient cannot be corrected or updated for the long time. Thus, drop of the laser output due to contamination of the mirror or the like cannot be compensated for and the suitable laser output may not be obtained. In this regard, "long running" or "continuous running" means that a power source of the oscillator is ON for a long time or is continuously ON. Therefore, there is a period of time when the laser output is suspended or the laser is outputted but a shutter (described below) is closed. (In general, ON and OFF of the laser output (including a preliminary waiting state) and opening and closing of the shutter are controlled by a machining program.)

SUMMARY OF THE INVENTION

Accordingly, an object of the present invention is to solve the above problems of the prior laser unit and to calculate and update the correction coefficient during the continuous running of the oscillator, without stopping and restarting the oscillator, so as to obtain an accurate laser output.

In order to solve the problem, the invention improves the laser unit in which a correction coefficient is obtained by calculating a ratio of a command value of laser output to an actual measured value at a starting time of the oscillator and the correction coefficient is multiplied by the following command value for correcting the laser output. That is, according to the invention, the measurement of the output and the update of the correction coefficient are carried out by an update activation signal for the correction coefficient, at suitable time after starting time of the oscillator.

According to the invention, there is provided a laser unit comprising: a laser oscillator capable of outputting a laser beam based on a laser output command value and a correction command value obtained by multiplying a correction coefficient by the laser output command value; a laser application device which carries out at least one of laser beam machining, illumination, chemical reaction, and power generation using a laser beam; a control device which outputs the laser output command value and the correction command value for controlling the laser oscillator; and an output measuring device for calculating an actual measured output value by measuring the laser output of the laser oscillator based on the laser output command value; wherein the control device comprising: a correction part for obtaining the correction coefficient by calculating a ratio of the laser output command value to the actual measured output value; and a command control part which sets the correction coefficient by activating the output measuring device and the correction part at a starting time of the laser oscillator and updates the correction coefficient by activating the output measuring device and the correction part when the command control part receives an update activation signal for the correction coefficient after the starting time of the laser oscillator.

The update activation signal may be an external signal inputted from outside of the laser unit or may be generated by a switch operation.

Alternatively, the laser unit may further comprise an indicator having a display. In this case, the update activation signal may be generated by a command inputted at the display.

The control device may make the update activation signal invalid during operation of the output measuring device or the correction part or during automatic running of the laser unit.

BRIEF DESCRIPTION OF THE DRAWINGS

The above and other objects, features and advantages of the present invention will be made more apparent by the following description of the preferred embodiments thereof, with reference to the accompanying drawings, wherein:

Fig. 1 is a block diagram showing an overview of a configuration of a laser unit according to an embodiment of the present invention;
Fig. 2 is a diagram showing a configuration of main parts of a laser oscillator;
Fig. 3 is an example of the display in case that updating of a correction coefficient is activated by a display operation;
Fig. 4 is a flowchart of showing a scheme of a sequence including calculation and update of the correction coefficient in the embodiment of the invention; and
Fig. 5 is a block diagram showing a basic configuration of the laser unit according to the invention.

DETAILED DESCRIPTIONS

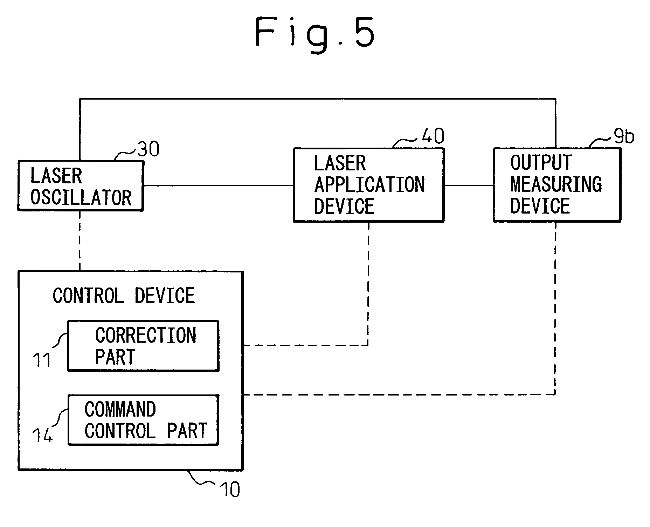

Fig. 5 is a block diagram showing a basic configuration of a laser unit according to the present invention. The laser unit includes: a laser oscillator 30 capable of outputting a laser beam based on a laser output command value and a correction command value obtained by multiplying a correction coefficient by the laser output command value; a laser application device 40 which carries out at least one of laser beam machining, illumination, chemical reaction, and power generation using a laser beam; a control device 10 which outputs the laser output command value and the correction command value for controlling the laser oscillator 30; and an output measuring device 9b for calculating an actual measured output value by measuring the laser output of the laser oscillator 30 based on the laser output command value. The control device 10 includes a correction part 11 for obtaining the correction coefficient by calculating a ratio of the laser output command value to the actual measured output value; and a command control part 14 which sets the correction coefficient by activating the output measuring device 9b and the correction part 11 at a starting time of the laser oscillator 30 and, updates the correction coefficient by activating the output measuring device 9b and the correction part 11 when the command part 14 receives an update activation signal for the correction coefficient after the starting time of the laser oscillator 30.

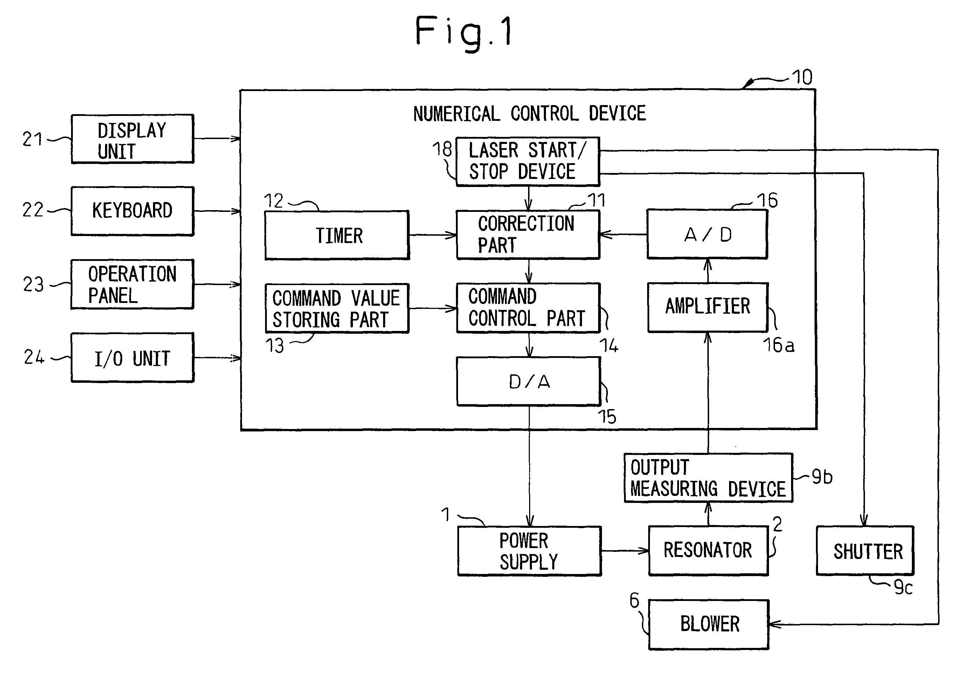

One embodiment of the present invention is explained below with reference to drawings. Fig. 1 is a block diagram showing an overview of a configuration of the laser unit according to the embodiment of the invention. In Fig. 1, a reference numeral 10 denotes the control device which controls the whole laser application device including the control of a laser oscillator. More specifically, the control device in this case is a computer numerical controller (CNC) for controlling a laser beam machine. When the laser application device carries out illumination, chemical reaction, or power generation using a laser beam, control devices for an illumination unit, a chemical reaction unit, and a power generator are employed respectively. Configurations and functions of parts relevant to the control of the laser oscillator explained below may be basically the same.

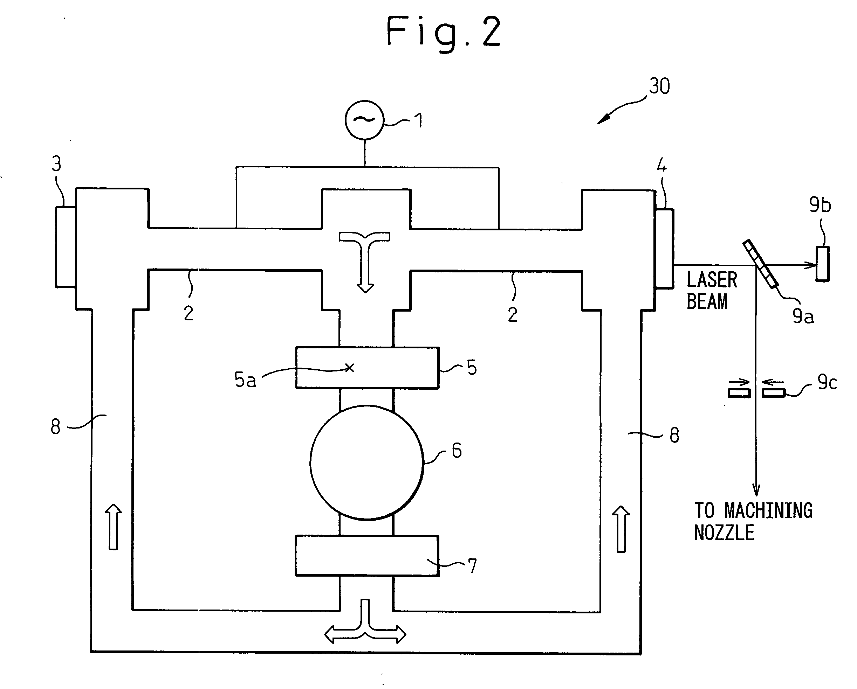

As an internal configuration of the computer numerical control device 10, parts particularly relevant to the control of the laser oscillator based on the application of the invention are shown. The configuration of the main part 30 of the laser oscillator may be a known part, and Fig. 2 shows one example of the main part 30. In Fig. 2, a reference numeral 1 denotes a power supply for a discharge excitation. The power supply 1 applies a high-frequency voltage of a radio frequency domain to an electrode (not shown) of a discharge tube (i.e., a resonator) 2. In order to generate this high-frequency voltage, there is usually employed a system that once rectifies a three-phase alternate current and outputs a direct current, and converts this direct current output into a high-frequency voltage with an inverter.

The discharge tube (the resonator) 2 is disposed between a rear mirror 3 and an output mirror 4 that constitute an optical resonator. The two mirrors 3 and 4 are held by not shown holding mechanisms. The discharge tube 2 is built in a circular path including heat exchangers 5, 7 and a blower 6, as shown in Fig. 2, and can pass medium gas (i.e., laser gas) 8 through this circular path.

When the discharge excitation power supply 1 is started, to generate a discharge thereby exciting the medium gas 8, a laser beam is generated within the optical resonator. The medium gas 8 reaches a high temperature due to the discharge and, then, is cooled by the heat exchanger 5 before reaching the blower 6. The blower 6 sucks the cooled medium gas 8, and delivers it to a discharge side with pressure. In this process, the temperature rises due to the compression. The heat exchanger 7 at the discharge side of the blower 6 cools down the medium gas again, thereby restricting a rise in the temperature of the medium gas 8. The medium gas 8 that is delivered from the blower 6 passes through the heat exchanger 7, and is recycled to the discharge tube 2.

A laser start/stop device 18 provided in the computer numerical control device 10 controls the operation of the blower 6. The blower 6 has a known pressure adjusting mechanism (not shown) to deliver the medium gas. The laser start/stop device 18 is configured to be able to start/stop the blower 6 and control the delivery pressure adjusting mechanism. The laser start/stop device 18 carries out a necessary control to start/stop the laser oscillator, as well as the control of the operation of the blower 6. When the oscillator is started or stopped, the laser start/stop device 18 outputs start/stop signals to a command control part 14. When the oscillator is started, the command control part 14 sends each command value for starting up the oscillator to the power supply 1 via a D/A converter 15. When the oscillator is stopped, the command control part 14 sends a command value for shutting down the oscillator to the power supply 1 via the D/A converter 15.

A translucent mirror 9 is positioned in an optical path of the laser beam outputted from the output mirror 4. A laser output measuring device (or a power detector) 9b is positioned behind the translucent mirror 9. The laser beam outputted from the output mirror 4 is split by the mirror 9 into a transmitted beam and a reflected beam. The transmitted beam passes through the translucent mirror 9, and is inputted to the laser output measuring device 9b. A signal that expresses a result of the measurement is amplified by an amplifier 16a within the computer numerical control device 10, is analog-to-digital (A/D) converted by an A/D converter 16, and is inputted to a correcting calculating part 11, as shown in Fig. 1. Functions of the correction calculating part 11 will be described later.

On the other hand, the reflected beam is, for example, introduced to a not-shown machining nozzle through a light path configured by an optical fiber and is irradiated onto a workpiece to be machined as a machining laser beam. In the light path, a shutter 9c is positioned and configured to be opened or closed by the laser start/stop device 18. When the shutter 9c is closed, the laser beam is not irradiated from the machining nozzle even when the oscillator outputs the laser beam. When the laser application device is used for other purpose than the machining, such as illumination, chemical reaction or power generation, a laser irradiation device suitable for the purpose is prepared instead of the machining nozzle.

As the heat exchangers 5 and 7 are publicly known, their detailed configurations are omitted. In this embodiment, heat exchangers having a large number of tubules for passing cooling water are used. Cooling water at a constant temperature is supplied from a cooling water supply source not shown. A temperature sensor is disposed in the water flow or on a flow tube (indicated by a reference numeral 5a) of the cooling water flowing through the heat exchanger 5 before the blower 6. An output signal from the temperature sensor may be used for controlling the temperature of the cooling water.

The amount of power supplied per unit time from the power supply 1 which drives the discharge tube (or the resonator) 2 is calculated following an analog command value obtained by converting, using the D/A converter 15, an output (i.e., a digital command value) of the command control part 14 provided within the computer numerical control device 10.

However, as described above, a change occurs between the command value output from the command control part 14 and the laser output value actually obtained, due to a change in the posture of the mirrors 3 and 4 used in the resonator or due to aging attributable to contamination, etc. In order to compensate for this change, a correction coefficient is multiplied by the output value of the command control part 14, and the multiplied result is D/A converted, thereby controlling the power supply 1.

Calculation of the correction coefficient and storage (or update) of the calculated result are carried out by the correction part 11. As described below, the correcting part 11 may obtain the correction coefficient from a ratio of a laser output reference command value set in advance to the actual output measured value when the correction part 11 receives an update activation signal for the correction coefficient. The correction calculating part 11 may includes an internal memory that stores the calculation result. In general, calculation of the correction coefficient is repeated many times, thereby the stored value of the correction coefficient is updated every time.

The actual output measured value (i.e., power of the laser output) required for calculation of the correction coefficient is measured by the laser output measuring device 9b, as described above. The amplifier 16a amplifies the actual output measured value, the A/D converter 16 A/D converts the amplified result, and inputs the A/D converted result to the correction part 11. The timing of calculating the correction coefficient is described later.

A timer 12 informs the correction part 11 about the time necessary to determine the timing of calculating a correction coefficient. A command value storing part 13 stores a laser output command value to carry out a laser machining. Various laser output command values are usually stored. Which one of these laser output command values is to be used is assigned by a machining program. To execute the laser machining, the command control part 14 reads a correction coefficient stored in the correction part 11. The command control part 14 multiplies the read correction coefficient by the laser output command value (for example, a command value according to the machining program) from the command value storing part 13. The multiplied result is D/A converted by the D/A converter 15, and is then outputted to the power supply 1. As described above, the power supply 1 supplies power to the discharge tube 2 following a given command value. The discharge tube 2 outputs a laser beam according to the supplied power.

Reference numerals 21 and 22 denote a display unit and a keyboard, respectively, which are attached to the computer numerical control device 10 in a known mode, and are used to input a command value, various data and parameters of a laser beam machine. The display unit 21 uses a cathode ray tube (CRT), a liquid crystal, etc., and may be used to display a position of a machining head (or a worktable), a move speed, a laser output state, a laser beam machining condition, etc. The display unit 21 may be also used to display messages such as alarms to be described later. The keyboard 22 may be used to input command values of the laser beam machine (i.e., command values stored in the command value storing part 13), and various data and parameters. The keyboard 22 may be also used to turn on/off the laser beam machine, start a laser beam machining by assigning a machining program, carry out various operations such as a compulsory stop, editing the machining program, etc.

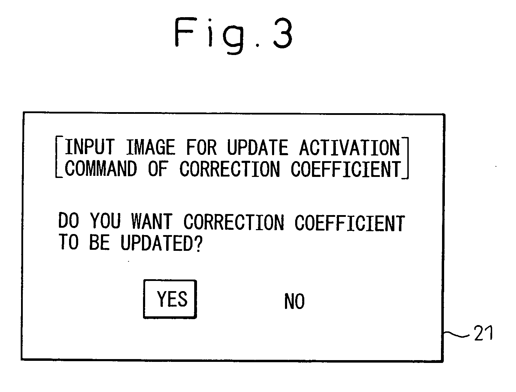

Further, the display unit 21 and the keyboard 22 may have a function, as well as the above general functions, for inputting an update activation signal (or command) for the correction coefficient to the numerical control device 10 after the oscillator is activated. When the command is inputted by using the display unit 21, a pictorial image such as shown in Fig. 3 may be displayed on the display 21 by operation of the keyboard 22. In this case, a part indicating "UPDATE OPERATION OF CORRECTION COEFFICIENT" may be marked by a keyboard operation.

Alternatively, the update activation signal (or command) may be inputted to the numerical control device 10 by operating a switch of an operation panel 23 separately provided. Otherwise, an external signal for updating the correction coefficient may be inputted by means of an I/O device 24 configured to input/output the external signal.

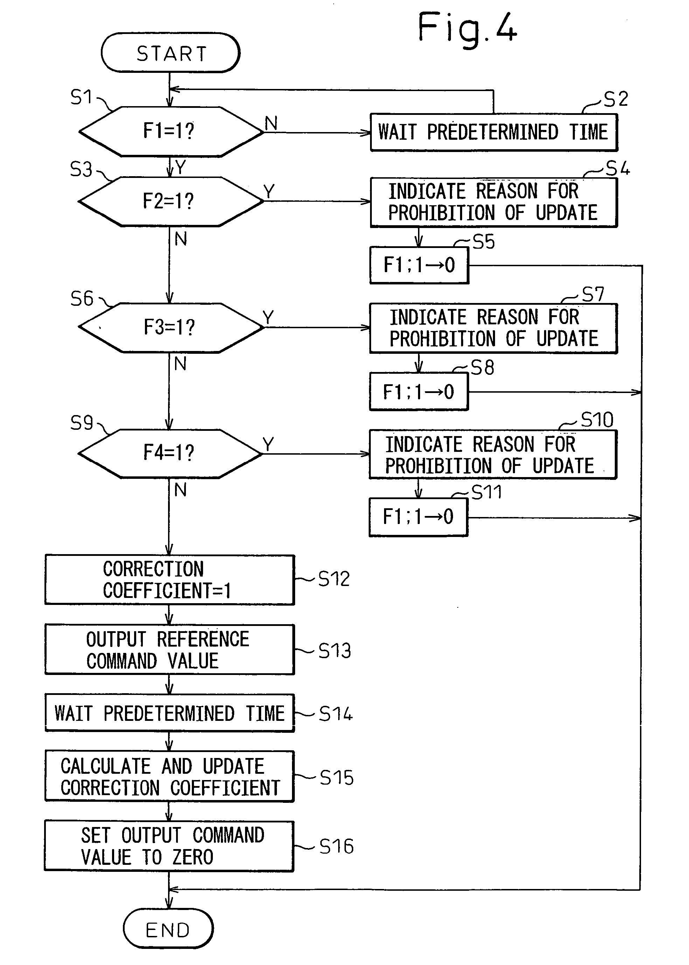

Next, a scheme of a sequence, carried out by using the above constitutions and functions, including calculation and update of the correction coefficient corresponding to the update activation signal is described with reference to the flowchart in Fig. 4. This sequence is started after starting up of the oscillator (or activation of the power supply) is completed and following update of the correction coefficient according to prior art. This update may include measurement of the actual output and calculation, update and storage of the coefficient, regarding the laser output reference command value. Therefore, the correction coefficient at the beginning of the sequence is equal to one updated at starting time of the oscillator in the above prior art. For example, the correction coefficient at the beginning of the sequence is equal to 1.22. In prior art, the correction coefficient is used without being updated for long time, in 24 hours continuous running, etc.

Each component for executing the sequence program is controlled by a not-shown CPU of the computer numerical control device 10. A program, parameters and flag values for the control are stored in a not-shown memory of the control device 10. The flag values may include following values:

F1; which indicates an input condition of the update activation signal to the control device 10.
If F1 = 0, the signal is not outputted. If F1 = 1, the signal is outputted. An initial value of F1 is zero.
F2; which indicates whether the laser unit is automatically running or not.
If F2 = 0, the laser unit is not automatically running. If F2 = 1, the laser unit is automatically running.
F3; which indicates an output condition of laser beam.
If F3 = 0, the laser beam is not outputted. If F3 = 1, the laser beam is outputted.
F4; which indicates an open/close condition of the shutter 9c.
If F4 = 0, the shutter is closed. If F4 = 1, the shutter is opened.

The above sequence is started after the oscillator is started (or the power supply 1 is activated). The key point of each step of the sequence is explained below.

Step S1

The value of flag F1 indicating the input condition of the update activation signal is checked. If F1 = 0 (the signal is not inputted), the process of the sequence is progressed to step S2. If F1 = 1, (the signal is inputted), the process is progressed to step S3. As described above, the initial value of F1 is set to zero. The condition in which F1 = 1 means that the update activation signal (or command) for the correction coefficient is inputted to the numerical control device 10.

As described above, the update activation signal (or command) may be inputted by operation of the display unit 21, operation of the keyboard 22, operation of the switch of the operation panel 23 or inputting an external signal via the I/O device 24. For example, an operator may set F1 to "1" by operating the display, the keyboard or the switch in daytime every day, otherwise, by inputting the external signal on a fixed time every day.

Step 2

The process waits for a predetermined time (for example, for three seconds) and is returned to step S1.

Step S3

The value of flag F2 indicating whether the laser unit is in automatic running or not is checked. If F2 = 1 (in automatic running), the process is progressed to step S4, otherwise, to step S6.

Step S4

The display unit 21 indicates, for example, "UPDATE OPERATION OF CORRECTION EFFICIENT IS NOT PERMITTED IN AUTOMATIC RUNNING".

Step S5

The value of the flag F1 is set to zero and the sequence is once terminated.

Step S6

The value of the flag F3 indicating whether the laser beam is being outputted or not is checked. If F3 = 1 (the laser beam is being outputted), the process is progressed to step S7, otherwise, to step S9.

Step S7

The display unit 21 indicates, for example, "UPDATE OPERATION OF CORRECTION EFFICIENT IS NOT PERMITTED DURING OUTPUTTING LASER BEAM".

Step S8

The value of the flag F1 is set to zero and the sequence is once terminated.

Step S9

The value of the flag F4 indicating the open/close condition of the shutter 9c is checked. If F4 = 1 (the shutter is opened), the process is progressed to step S10. If F4 = 0, (the shutter is closed), the process is progressed to step S12.

Step S10

The display unit 21 indicates, for example, "UPDATE OPERATION OF CORRECTION EFFICIENT IS NOT PERMITTED WHEN SHUTTER IS OPENED".

Step S11

The value of the flag F1 is set to zero and the sequence is once terminated.

Step S12

The value of the correction coefficient is set to "1". This is an operation for substantially invalidating a correcting function of the laser output when the correction coefficient is updated.

Step S13

The laser output reference command value is outputted to output the laser beam. The shutter 9c is still closed.

Step S14

The process waits for a predetermined time required for stabilizing the laser output (for example, for three minutes) and is progressed to step S15.

Step S15

The output measuring device 9b measures the actual laser output and, a new correction coefficient to be set is calculated and stored. An equation to be used is indicated below:

correction coefficient = (laser output reference

command value)/(actual laser output value)

For example, if the laser output reference command value is 1000W and the actual laser output value is 800W, the correction coefficient is 1.25 (= 1000/800).

Step S16

An output command value is set to zero and the sequence is once terminated. When the correction coefficient is required to be updated again, the operator may execute the sequence again by operation of the display unit 21, operation of the keyboard 22, operation of the switch of the operation panel 23 or inputting an external signal via the I/O device 24.
According to the present invention, the correction coefficient may be arbitrarily updated, at the judgment of the operator, even when the oscillator is activated. Therefore, the suitably corrected correction coefficient may be obtained even during long running.
While the invention has been described with reference to specific embodiments chosen for the purpose of illustration, it should be apparent that numerous modifications could be made thereto, by one skilled in the art, without departing from the basic concept and scope of the invention.

**Claims**

1. A laser unit comprising:

a laser oscillator (30) capable of outputting a laser beam based on a laser output command value and a correction command value obtained by multiplying a correction coefficient by the laser output command value;
a laser application device (40) which carries out at least one of laser beam machining, illumination, chemical reaction, and power generation using a laser beam;
a control device (10) which outputs the laser output command value and the correction command value for controlling the laser oscillator (30); and
an output measuring device (9b) for calculating an actual measured output value by measuring the laser output of the laser oscillator (30) based on the laser output command value; wherein

the control device (10) comprising:

a correction part (11) for obtaining the correction coefficient by calculating a ratio of the laser output command value to the actual measured output value; and
a command control part (14) which sets the correction coefficient by activating the output measuring device (9b) and the correction part (11) at a starting time of the laser oscillator (30) and updates the correction coefficient by activating the output measuring device (9b) and the correction part (11) when the command control part (14) receives an update activation signal for the correction coefficient after the starting time of the laser oscillator (30).

2. The laser unit as set forth in claim 1, wherein the update activation signal is an external signal inputted from outside of the laser unit.

3. The laser unit as set forth in claim 1, wherein the update activation signal is generated by a switch operation.

4. The laser unit as set forth in claim 1, wherein the laser unit further comprises an indicator having a display (21) and the update activation signal is generated by a command inputted at the display.

5. The laser unit as set forth in any preceding claims, wherein the control device (10) makes the update activation signal invalid during operation of the output measuring device (9b) or the correction part (11) or during automatic running of the laser unit.

# Fig.1

# Fig.2

LASER BEAM

TO MACHINING NOZZLE

EP 1 577 990 A2

# Fig.3

```
┌INPUT IMAGE FOR UPDATE ACTIVATION┐
└COMMAND OF CORRECTION COEFFICIENT┘

DO YOU WANT CORRECTION COEFFICIENT
TO BE UPDATED?

      ┌─────┐
      │ YES │         NO
      └─────┘
```

~21

# Fig.4

```
          ┌─────────────┐
          │    START    │
          └─────────────┘
                 │
        S1       ▼                              S2
       ◇─────────────────◇    N      ┌────────────────────────────┐
       │     F1=1?        ├────────▶ │ WAIT PREDETERMINED TIME    │
       ◇─────────────────◇          └────────────────────────────┘
                 │ Y
        S3       ▼                              S4
       ◇─────────────────◇    Y      ┌────────────────────────────┐
       │     F2=1?        ├────────▶ │ INDICATE REASON FOR        │
       ◇─────────────────◇          │ PROHIBITION OF UPDATE      │
                 │ N                 └────────────────────────────┘
                 │                          │  S5
                 │                   ┌──────────────┐
                 │                   │  F1;1→0      │
                 │                   └──────────────┘
        S6       ▼                              S7
       ◇─────────────────◇    Y      ┌────────────────────────────┐
       │     F3=1?        ├────────▶ │ INDICATE REASON FOR        │
       ◇─────────────────◇          │ PROHIBITION OF UPDATE      │
                 │ N                 └────────────────────────────┘
                 │                          │  S8
                 │                   ┌──────────────┐
                 │                   │  F1;1→0      │
                 │                   └──────────────┘
        S9       ▼                              S10
       ◇─────────────────◇    Y      ┌────────────────────────────┐
       │     F4=1?        ├────────▶ │ INDICATE REASON FOR        │
       ◇─────────────────◇          │ PROHIBITION OF UPDATE      │
                 │ N                 └────────────────────────────┘
                 │                          │  S11
                 │                   ┌──────────────┐
                 │                   │  F1;1→0      │
                 ▼                   └──────────────┘
       ┌─────────────────────┐ S12
       │ CORRECTION          │
       │ COEFFICIENT=1       │
       └─────────────────────┘
                 │
       ┌─────────────────────┐ S13
       │ OUTPUT REFERENCE    │
       │ COMMAND VALUE       │
       └─────────────────────┘
                 │
       ┌─────────────────────┐ S14
       │ WAIT PREDETERMINED  │
       │ TIME                │
       └─────────────────────┘
                 │
       ┌─────────────────────┐ S15
       │ CALCULATE AND UPDATE│
       │ CORRECTION COEFFICIENT
       └─────────────────────┘
                 │
       ┌─────────────────────┐ S16
       │ SET OUTPUT COMMAND  │
       │ VALUE TO ZERO       │
       └─────────────────────┘
                 │
          ┌─────────────┐
          │    END      │
          └─────────────┘
```

# Fig.5

LASER
OSCILLATOR ~30

LASER
APPLICATION
DEVICE ~40

OUTPUT
MEASURING
DEVICE ~9b

CONTROL DEVICE

CORRECTION
PART 11

COMMAND
CONTROL PART 14

10